(19) **Europäisches Patentamt European Patent Office Office européen des brevets**

(11) **EP 4 564 803 A1**

(12) **EUROPEAN PATENT APPLICATION**
published in accordance with Art. 153(4) EPC

(43) Date of publication:
04.06.2025 Bulletin 2025/23

(21) Application number: 24744086.0

(22) Date of filing: 04.01.2024

(51) International Patent Classification (IPC):
*H04N 5/76* (2006.01)

(52) Cooperative Patent Classification (CPC):
H04N 5/91; H04N 5/772; H04N 7/14;
H04N 21/4334; H04N 21/4424; H04N 23/60;
H04N 23/617

(86) International application number:
PCT/CN2024/070529

(87) International publication number:
WO 2024/152910 (25.07.2024 Gazette 2024/30)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 18.01.2023 CN 202310086132

(71) Applicant: Huawei Technologies Co., Ltd.
Shenzhen, Guangdong 518129 (CN)

(72) Inventors:
• SHEN, Risheng
Shenzhen, Guangdong 518129 (CN)
• SHEN, Mingda
Shenzhen, Guangdong 518129 (CN)
• LAN, Xueyuan
Shenzhen, Guangdong 518129 (CN)

(74) Representative: Pfenning, Meinig & Partner mbB
Patent- und Rechtsanwälte
Theresienhöhe 11a
80339 München (DE)

(54) **VIDEO RECORDING METHOD AND ELECTRONIC DEVICE**

(57) This application provides a video recording method and an electronic device. The method is applied to the electronic device. After a video recording function is enabled, the electronic device may detect smoothness of video recording and load of a processor. When it is determined that the video recording is not smooth and that the load of the processor is greater than a first threshold, a configuration of the video recording may be reduced to improve the smoothness of the video recording. This avoids deterioration of video quality of the video recording caused by blindly reducing the configuration of the video recording and can improve user experience.

FIG. 3

**Description**

This application claims priority to Chinese Patent Application No. 202310086132.X, filed with the China National Intellectual Property Administration on January 18, 2023 and entitled "VIDEO RECORDING METHOD AND ELECTRONIC DEVICE", which is incorporated herein by reference in its entirety.

**TECHNICAL FIELD**

This application relates to the field of electronic devices, and more specifically, to a video recording method and an electronic device.

**BACKGROUND**

With the progress of technologies, video recording scenarios such as video chat and live video broadcast are widely used. In the foregoing scenarios, users are quite sensitive to smoothness of video recording. When frame freezing occurs in video recording, user experience is reduced. Currently, when load of a processor is excessively high, a frame rate and a resolution during video recording may be reduced. However, the excessively high load of the processor is not the only reason for a decrease in smoothness of the video recording. If the frame rate and the resolution during video recording are reduced when the load of the processor is excessively high, the smoothness of video recording cannot be improved, and the frame rate and the resolution during video recording are further reduced. This further reduces user experience.

**SUMMARY**

This application provides a video recording method and an electronic device, so that when it is determined that video recording is not smooth and that load of a processor is excessively high, a configuration of the video recording can be reduced to improve smoothness of the video recording. This avoids deterioration of video quality of the video recording caused by blindly reducing the configuration of the video recording and improves user experience.

According to a first aspect, a video recording method is provided and is applied to an electronic device. A video recording function is enabled on the electronic device. The method includes: detecting smoothness of video recording and load of a processor; and if it is determined that a first trigger condition is met, reducing a configuration of the video recording to improve the smoothness of the video recording, where the first trigger condition includes determining, based on the smoothness of the video recording, that the video recording is not smooth and determining that the load of the processor is greater than a first threshold.

In this embodiment of this application, the electronic device may detect the smoothness of the video recording and the load of the processor, and may reduce the configuration of the video recording only when determining that the video recording is not smooth and that the load of the processor is high. This avoids deterioration of video quality of the video recording caused by blindly reducing the configuration of the video recording and can improve user experience.

With reference to the first aspect, in some implementations of the first aspect, the configuration of the video recording includes at least one of a frame rate and a resolution of the video recording.

With reference to the first aspect, in some implementations of the first aspect, the method further includes: if it is determined that a second trigger condition is met, improving the configuration of the video recording to improve the video quality of the video recording, where the second trigger condition includes: determining, based on the smoothness of the video recording, that the video recording is smooth and that the load of the processor is less than a second threshold.

In this embodiment of this application, the electronic device may detect the smoothness of the video recording and the load of the processor. When it is determined that the video recording is smooth and that the load of the processor is low, the configuration of the video recording may be improved, so that the video quality of the video recording can be further improved, and user experience is enhanced.

With reference to the first aspect, in some implementations of the first aspect, before the reducing a configuration of the video recording, the method further includes: detecting a processor resource supply parameter of the video recording, where the processor resource supply parameter of the video recording represents a proportion of occupying the load of the processor by the video recording; and the first trigger condition further includes that the processor resource supply parameter of the video recording is greater than a third threshold.

In this embodiment of this application, the electronic device may detect the smoothness of the video recording, the load of the processor, and the processor resource supply parameter of the video recording, and may reduce the configuration of the video recording only when determining that the video recording is not smooth, that the load of the processor is high, and that the processor resource supply parameter is high. This avoids deterioration of the video quality of video recording caused by blindly reducing the configuration of the video recording and can improve user experience.

With reference to the first aspect, in some implementations of the first aspect, the processor resource supply parameter is a ratio of running duration of a process and/or a thread of the video recording to total duration.

With reference to the first aspect, in some implementations of the first aspect, the detecting smoothness of video recording includes: obtaining N parameters, where the N parameters represent the smoothness of the video recording, $N \geq 1$, and N is an integer.

With reference to the first aspect, in some implementations of the first aspect, the N parameters include one or more of the following: an actual frame rate, a frame loss rate, and an inter-frame jitter rate.

With reference to the first aspect, in some implementations of the first aspect, the determining, based on the smoothness of the video recording, that the video recording is not smooth includes: The actual frame rate is less than a fourth threshold; and/or the frame loss rate is greater than a fifth threshold; and/or the inter-frame jitter rate is greater than a sixth threshold.

For example, the fourth threshold may be a product of a theoretical frame rate and a fourth threshold coefficient. For example, when the theoretical frame rate is 30 FPS, and the fourth threshold coefficient is 0.8, the fourth threshold is 24 FPS; and when the actual frame rate is less than 24 FPS, the video recording is not smooth.

With reference to the first aspect, in some implementations of the first aspect, before the reducing a configuration of the video recording, the method further includes: detecting a temperature of the electronic device, where the first trigger condition further includes that the temperature of the electronic device is greater than a seventh threshold.

In this embodiment of this application, when adjusting the configuration of the video recording, the electronic device may further consider the temperature of the electronic device. When the smoothness of the video recording is low, and the temperature of the electronic device is high, the electronic device may reduce the configuration of the video recording.

With reference to the first aspect, in some implementations of the first aspect, before the reducing a configuration of the video recording, the method further includes: displaying a first control, where the first control corresponds to a function of reducing the configuration of the video recording; and the reducing a configuration of the video recording includes: reducing the configuration of the video recording in response to an operation of a user for the first control.

In this embodiment of this application, when determining that the video recording is not smooth and that the load of the processor is high, the electronic device may display the control used to improve smoothness, so that the electronic device can reduce the configuration of the video recording in response to the operation of the user for the control, to improve the smoothness of the video recording. This can improve user experience.

With reference to the first aspect, in some implementations of the first aspect, the electronic device displays a first control on an interface of the video recording, the first control corresponds to a function of reducing the configuration of the video recording, the first control is in a disabled state before the smoothness of the video recording and the load of the processor are detected, and before the reducing a configuration of the video recording, the method further includes: changing the first control from the disabled state to a normal state, so that the first control is operable; and the reducing a configuration of the video recording includes: reducing the configuration of the video recording in response to an operation of a user for the first control.

With reference to the first aspect, in some implementations of the first aspect, before the improving the configuration of the video recording, the method further includes: detecting a temperature of the electronic device, where the second trigger condition further includes that the temperature of the electronic device is less than an eighth threshold.

In this embodiment of this application, when improving the configuration of the video recording, the electronic device may further consider the temperature of the electronic device. When the temperature of the electronic device is low, the electronic device may improve the configuration of the video recording.

With reference to the first aspect, in some implementations of the first aspect, before the improving the configuration of the video recording, the method further includes: detecting a battery level of the electronic device, where the second trigger condition further includes that the battery level of the electronic device is greater than a ninth threshold.

In this embodiment of this application, when improving the configuration of the video recording, the electronic device may further consider the battery level of the electronic device. When the battery level of the electronic device is high, the electronic device may improve the configuration of the video recording, so that the electronic device is not powered off due to improvement of the configuration of the video recording.

With reference to the first aspect, in some implementations of the first aspect, before the improving the configuration of the video recording, the method further includes: displaying a second control, where the second control corresponds to a function of improving the configuration of the video recording; and the improving the configuration of the video recording includes: improving the configuration of the video recording in response to an operation of a user for the second control.

In this embodiment of this application, when determining that the video recording is smooth and that the load of the processor is less than the second threshold, the electronic device may display a control used to improve video quality, and may improve the configuration of the video recording in response to an operation of a user for the control to improve the video quality of the video recording. This can improve user experience.

With reference to the first aspect, in some implementations of the first aspect, the electronic device displays a second control on an interface of the video recording, the second control corresponds to a function of improving the configuration of the video recording, the second control is in a disabled state before the smoothness of the video recording and the load of the processor are detected; before the reducing the configuration of the video recording, the method further includes: changing the second control from the disabled state to a normal state, so that the second control is operable; and the improving the configuration of the video recording includes: improving the configuration of the video recording in response to an operation of a user for the second control.

According to a second aspect, an electronic device in an embodiment of this application is provided. The electronic device includes modules/units that perform the method according to any one of the foregoing aspect or the possible designs of the foregoing aspect. These modules/units may be implemented by hardware, or may be implemented by hardware by executing corresponding software.

According to a third aspect, a chip in an embodiment of this application is provided. The chip is coupled to a memory in an electronic device, and is configured to: invoke a computer program stored in the memory and perform the technical solutions according to any one of the foregoing aspects and the possible designs of the foregoing aspects in embodiments of this application. In this embodiment of this application, "coupling" means that two components are directly or indirectly combined with each other.

According to a fourth aspect, a computer-readable storage medium in an embodiment of this application is provided. The computer-readable storage medium includes a computer program. When the computer program is run on an electronic device, the electronic device is enabled to perform the technical solutions according to any one of the foregoing aspects and the possible designs of the foregoing aspects.

According to a fifth aspect, a computer program in an embodiment of this application is provided, where the computer program includes instructions. When the instructions are run on a computer, the computer is enabled to perform the technical solutions according to any one of the foregoing aspects and the possible designs of the foregoing aspects.

According to a sixth aspect, an electronic device in an embodiment of this application is provided. The electronic device includes one or more processors and one or more memories. The one or more memories store one or more computer programs, and the one or more computer programs include instructions. When the instructions are executed by the one or more processors, any one of the foregoing aspects and the possible implementations of the foregoing aspects is performed.

For beneficial effect of the second aspect to the sixth aspect, refer to beneficial effect of the first aspect. Details are not described again.

## BRIEF DESCRIPTION OF DRAWINGS

FIG. 1 is a diagram of a structure of an electronic device according to an embodiment of this application;
FIG. 2 is a block diagram of a software structure of an electronic device according to an embodiment of this application;
FIG. 3 is a schematic flowchart of a video recording method according to an embodiment of this application;
FIG. 4A and FIG. 4B are a schematic flowchart of a video recording method according to an embodiment of this application;
FIG. 5 is a schematic flowchart of a method for detecting a processor resource supply parameter of video recording according to an embodiment of this application;
FIG. 6(a), FIG. 6(b), and FIG. 6(c) show a group of GUIs according to an embodiment of this application; and
FIG. 7 is a diagram of a structure of an electronic device according to an embodiment of this application.

## DESCRIPTION OF EMBODIMENTS

Terms used in the following embodiments are merely intended to describe particular embodiments, but are not intended to limit this application. The terms "one", "a", "the", "the foregoing", "the", and "the one" of singular forms used in this specification and the appended claims of this application are also intended to include expression forms such as "one or more", unless otherwise specified in the context clearly. It should be further understood that in the following embodiments of this application, "at least one" and "one or more" mean one, two, or more. The term "and/or" is used to describe an association relationship between associated objects and represents that three relationships may exist. For example, A and/or B may represent the following cases: Only A exists, both A and B exist, and only B exists, where A and B may be singular or plural. The character "/" generally indicates an "or" relationship between associated objects.

Reference to "an embodiment", "some embodiments", or the like described in this specification indicates that one or more embodiments of this application include a specific feature, structure, or characteristic described with reference to the embodiment. Therefore, statements such as "in an embodiment", "in some embodiments", "in some other embodiments", and "in other embodiments" that appear at different places in this specification do not necessarily refer to a same embodiment. Instead, the statements mean "one or more but not all of embodiments", unless otherwise specifically emphasized in another manner. The terms "include", "comprise", "have", and their variants all mean "include but are not limited to", unless otherwise specifically emphasized in another manner.

The following describes an electronic device, and embodiments for using such an electronic device. In some embodiments, the electronic device may be a portable electronic device that further includes another function such as a personal digital assistant function and/or a music player function, for example, a mobile phone, a tablet computer, or a wearable electronic device (for example, a smartwatch) having a wireless communication function. An example embodiment of a portable electronic device includes but is not limited to a portable electronic device using iOS®, Android®, Microsoft®, or another operating system. The portable electronic device may alternatively be another portable electronic device, such as a laptop (Laptop). It should be further understood that, in some other embodiments, the foregoing electronic device may not be the portable electronic device but a desktop computer.

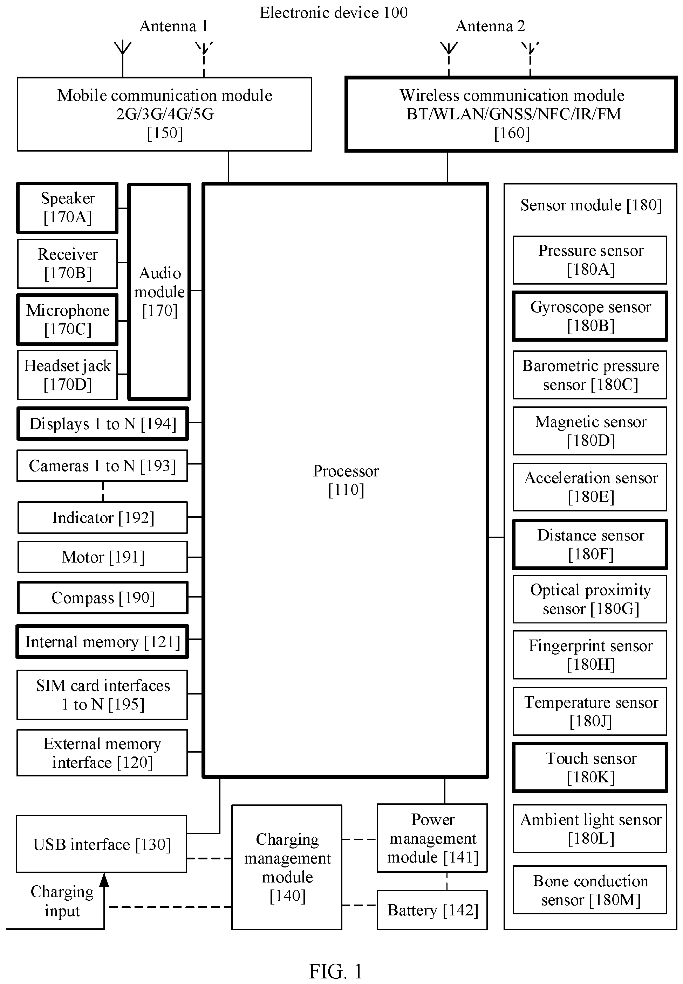

For example, FIG. 1 is a diagram of a structure of an electronic device 100. The electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a compass 190, a motor 191, an indicator 192, a camera 193, a display 194, a subscriber identity module (subscriber identity module, SIM) card interface 195, and the like.

It may be understood that the structure shown in this embodiment of this application does not constitute a specific limitation on the electronic device 100. In some other embodiments of this application, the electronic device 100 may include more or fewer components than those shown in the figure, or some components may be combined, or some components may be separated, or different component arrangements may be used. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent components, or may be integrated into one or more processors. In some embodiments, the electronic device 100 may alternatively include one or more processors 110. The controller may generate an operation control signal based on instruction operation code and a time sequence signal, to complete control of instruction fetching and instruction execution. In some other embodiments, a memory may further be disposed in the processor 110, to store instructions and data. For example, the memory in the processor 110 may be a cache. The memory may store instructions or data just used or cyclically used by the processor 110. If the processor 110 needs to use the instructions or data again, the instructions or data may be directly invoked from the memory. This avoids repeated access and reduces waiting time of the processor 110, thereby improving data processing or instruction execution efficiency of the electronic device 100.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/-transmitter (universal asynchronous receiver/transmitter, UART) interface, a mobile industry processor interface (mobile industry processor interface, MIPI), a general-purpose input/output (general-purpose input/output, GPIO) interface, a SIM card interface, a USB interface, and/or the like. The USB interface 130 is an interface that conforms to a USB standard specification, and may be specifically a mini USB interface, a micro USB interface, a USB type-C interface, or the like. The USB interface 130 may be configured to connect to a charger to charge the electronic device 100, or may be configured to transmit data between the electronic device 100 and a peripheral device. The USB interface 130 may alternatively be configured to connect to a headset to play audio by using the headset.

It can be understood that an interface connection relationship between modules illustrated in this embodiment of this application is merely an example for description, and does not constitute a limitation on a structure of the electronic device 100. In some other embodiments of this application, the electronic device 100 may alternatively use an interface connection manner different from that in the foregoing embodiment, or use a combination of a plurality of interface connection manners.

The charging management module 140 is configured to receive a charging input from the charger. The charger may be a wireless charger or a wired charger. In some embodiments of wired charging, the charging management module 140 may receive the charging input from the wired charger through the USB interface 130. In some embodiments of wireless charging, the charging management module 140 may receive a wireless charging input through a wireless charging coil of the electronic device 100. The charging management module 140 may further supply power to the electronic device by using the power management module 141 while charging the battery 142.

The power management module 141 is configured to connect to the battery 142, the charging management module 140, and the processor 110. The power management module 141 receives an input of the battery 142 and/or the charging management module 140, and supplies power to the processor 110, the internal memory 121, the external memory, the display 194, the camera 193, the wireless communication module 160, and the like. The power management module 141 may be further configured to monitor parameters such as a battery capacity, a battery cycle count, and a battery health status (electric leakage or impedance). In some other embodiments, the power management module 141 may alternatively be disposed in the processor 110. In some other embodiments, the power management module 141 and the charging management module 140 may alternatively be disposed in a same device.

A wireless communication function of the electronic device 100 may be implemented through the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the electronic device 100 may be configured to cover one or more communication frequency bands. Different antennas may be further multiplexed, to improve antenna utilization. For example, the antenna 1 may be multiplexed as a diversity antenna in a wireless local area network. In some other embodiments, an antenna may be used in combination with a tuning switch.

The mobile communication module 150 may provide a wireless communication solution that is applied to the electronic device 100 and that includes 2G, 3G, 4G, 5G, and the like. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules of the mobile communication module 150 may be disposed in the processor 110. In some embodiments, at least some functional modules of the mobile communication module 150 may be disposed in a same device as at least some modules of the processor 110.

The wireless communication module 160 may provide a wireless communication solution that is applied to the electronic device 100 and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, and the like. The wireless communication module 160 may be one or more devices integrating at least one communication processing module. The wireless communication module 160 receives an electromagnetic wave through the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

The electronic device 100 implements a display function through the GPU, the display 194, the application processor, and the like. The GPU is a microprocessor for image processing and is connected to the display 194 and the application processor. The GPU is configured to: perform mathematical and geometric calculation and render an image. The processor 110 may include one or more GPUs that execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flex light-emitting diode, FLED), a mini-LED, a micro-LED, a micro-OLED, a quantum dot light-emitting diode (quantum dot light-emitting diode, QLED), or the like. In some embodiments, the electronic device 100 may include one or more displays 194.

In some embodiments of this application, the display 194 in FIG. 1 is foldable when the display panel is made of a material such as an OLED, an AMOLED, or an FLED. Herein, that the display 194 is foldable means that the display may be folded to any angle at any part, and may be held at the angle. For example, the display 194 may be folded left and right from the middle. Alternatively, the display 194 may be folded up and down from the middle.

The display 194 of the electronic device 100 may be a flexible screen. Currently, the flexible screen attracts much attention due to unique features and huge potential of the flexible screen. Compared with a conventional display, the flexible display has features of strong flexibility and foldability, and can provide a new foldability-based interaction mode for a user, to satisfy more requirements of the user on the electronic device. For an electronic device configured with a foldable display, the foldable display of the electronic device may be switched between a small screen in a folded form and a large screen in an unfolded form at any time. Therefore, the user uses a split-screen function more frequently on the electronic device provided with the foldable display.

The electronic device 100 can implement a photographing function by using the ISP, the camera 193, the video codec, the GPU, the display 194, the application processor, and the like.

The ISP is configured to process data fed back by the camera 193. For example, during photographing, a shutter is pressed, and light is transferred to a photosensitive element of the camera through a lens. An optical signal is converted into an electrical signal, and the photosensitive element of the camera transfers the electrical signal to the ISP for processing, to convert the electrical signal into a visible image. The ISP may further perform algorithm optimization on noise, brightness, and complexion of the image. The ISP may further optimize parameters such as exposure and a color temperature of a photographing scenario. In some embodiments, the ISP may be disposed in the camera 193.

The camera 193 is configured to capture a static image or a video. An optical image of an object is generated through the lens, and is projected onto the photosensitive element. The photosensitive element may be a charge-coupled device (charge-coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format such as RGB or YUV. In some embodiments, the electronic device 100 may include one or more cameras 193.

The digital signal processor is configured to process a digital signal, and may process another digital signal in addition to the digital image signal. For example, when the electronic device 100 selects a frequency, the digital signal processor is configured to perform Fourier transform and the like on frequency energy.

The video codec is configured to: compress or decompress a digital video. The electronic device 100 may support one or more types of video codecs. Therefore, the electronic device 100 may play or record videos in a plurality of coding formats, for example, moving picture experts group (moving picture experts group, MPEG)-1, MPEG-2, MPEG-3, and MPEG-4.

The NPU is a neural-network (neural-network, NN) computing processor. The NPU quickly processes input information with reference to a structure of a biological neural network, for example, with reference to a transfer mode between human brain neurons, and may further continuously perform self-learning. Applications such as intelligent cognition of the electronic device 100, such as image recognition, facial recognition, speech recognition, and text understanding, can be implemented by using the NPU.

The external memory interface 120 may be used to connect to an external storage card, for example, a micro SD card, to extend a storage capability of the electronic device 100. The external storage card communicates with the processor 110 through the external memory interface 120, to implement a data storage function. For example, files such as music and a video are stored in the external storage card.

The internal memory 121 may be configured to store one or more computer programs. The one or more computer programs include instructions. The processor 110 may run the instructions stored in the internal memory 121, to enable the electronic device 100 to perform the method provided in some embodiments of this application, various applications, data processing, and the like. The internal memory 121 may include a program storage area and a data storage area. The program storage area may store an operating system. The program storage area may further store one or more applications (for example, Gallery and Contacts), and the like. The data storage area may store data (for example, a photo and a contact) created during use of the electronic device 100, and the like. In addition, the internal memory 121 may include a high-speed random access memory, and may further include a non-volatile memory such as one or more magnetic disk storage devices, a flash memory, or a universal flash storage (universal flash storage, UFS). In some embodiments, the processor 110 may run the instructions stored in the internal memory 121 and/or the instructions stored in the memory that is disposed in the processor 110, to enable the electronic device 100 to perform the method provided in embodiments of this application, other applications, and data processing. The electronic device 100 may implement audio functions such as a music playing function and a recording function by using the audio module 170, the speaker 170A, the receiver 170B, the microphone 170C, the headset jack 170D, the application processor, and the like.

The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

The pressure sensor 180A is configured to sense a pressure signal, and can convert the pressure signal into an electrical signal. In some embodiments, the pressure sensor 180A may be disposed on the display 194. There are a plurality of types of pressure sensors 180A, such as a resistive pressure sensor, an inductive pressure sensor, and a capacitive pressure sensor. The capacitive pressure sensor may include at least two parallel plates made of conductive materials. When a force is applied to the pressure sensor 180A, capacitance between electrodes changes. The electronic device 100 determines pressure intensity based on a capacitance change. When a touch operation is performed on the display 194, the electronic device 100 detects intensity of the touch operation by using the pressure sensor 180A. The electronic device 100 may calculate a touch location based on a detection signal of the pressure sensor 180A. In some embodiments, touch operations that are performed at a same touch location but have different touch operation intensity may correspond to different operation instructions. For example, when a touch operation whose touch operation intensity is less than a first pressure threshold is performed on an SMS message application icon, an instruction for viewing an SMS message is executed. When a touch operation whose touch operation intensity is greater than or equal to the first pressure threshold is performed on the SMS message application icon, an instruction for creating an SMS message is executed.

The gyroscope sensor 180B may be configured to determine a motion posture of the electronic device 100. In some embodiments, angular velocities of the electronic device 100 around three axes (namely, axes X, Y, and Z) may be determined by using the gyroscope sensor 180B. The gyroscope sensor 180B may be configured to implement image stabilization during photographing. For example, when the shutter is pressed, the gyroscope sensor 180B detects a shaking angle of the electronic device 100, calculates, based on the angle, a distance for which a lens module needs to compensate, and allows the lens to move reversely to cancel the shaking of the electronic device 100, to implement image stabilization. The gyroscope sensor 180B may also be used in a navigation scenario and a motion-sensing game scenario.

The acceleration sensor 180E may detect accelerations of the electronic device 100 in various directions (usually on three axes). When the electronic device 100 is in a static state, a magnitude and a direction of gravity may be detected. The acceleration sensor 180E may be further configured to recognize a posture of the electronic device, and is used in an application such as switching between landscape mode and portrait mode or a pedometer.

The ambient light sensor 180L is configured to sense ambient light brightness. The electronic device 100 may adaptively adjust brightness of the display 194 based on the sensed ambient light brightness. The ambient light sensor 180L may also be configured to automatically adjust a white balance during photographing. The ambient light sensor 180L may also cooperate with the optical proximity sensor 180G to detect whether the electronic device 100 is in a pocket, to avoid an accidental touch.

The fingerprint sensor 180H is configured to collect a fingerprint. The electronic device 100 may use a feature of the collected fingerprint to implement fingerprint-based unlocking, application lock access, fingerprint-based photographing, fingerprint-based call answering, and the like.

The temperature sensor 180J is configured to detect a temperature. In some embodiments, the electronic device 100 executes a temperature processing policy based on the temperature detected by the temperature sensor 180J. For example, when the temperature reported by the temperature sensor 180J exceeds a threshold, the electronic device 100 lowers performance of a processor near the temperature sensor 180J, to reduce power consumption and implement thermal protection. In some other embodiments, when the temperature is less than another threshold, the electronic device 100 heats the battery 142 to prevent the electronic device 100 from being shut down abnormally due to a low temperature. In some other embodiments, when the temperature is less than still another threshold, the electronic device 100 boosts an output voltage of the battery 142 to avoid abnormal shutdown due to a low temperature.

The touch sensor 180K is also referred to as a "touch panel". The touch sensor 180K may be disposed on the display 194, and the touch sensor 180K and the display 194 form a touchscreen, which is also referred to as a "touch screen". The touch sensor 180K is configured to detect a touch operation performed on or near the touch sensor. The touch sensor may transfer the detected touch operation to the application processor to determine a type of a touch event. A visual output related to the touch operation may be provided through the display 194. In some other embodiments, the touch sensor 180K may alternatively be disposed on a surface of the electronic device 100 at a location different from a location of the display 194.

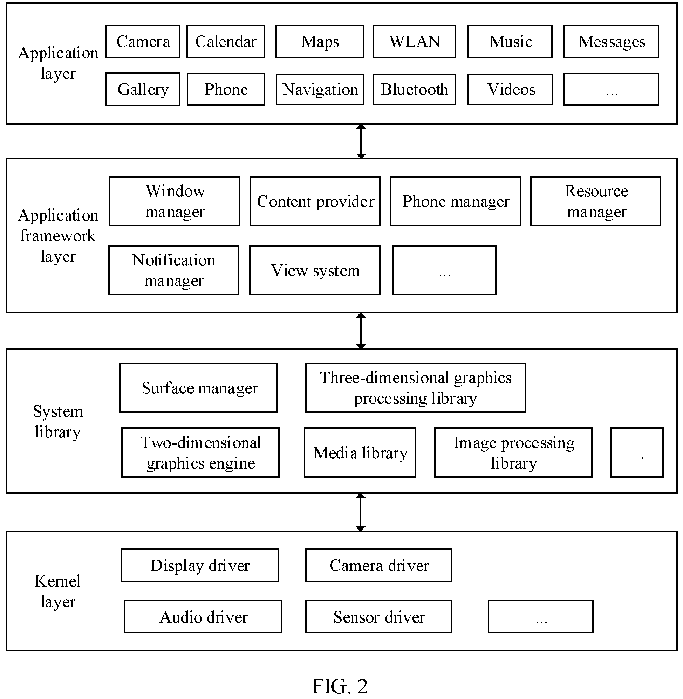

FIG. 2 is a block diagram of a software structure of the electronic device 100 according to an embodiment of this application. In a layered architecture, software is divided into several layers, and each layer has a clear role and task. The layers communicate with each other through a software interface. In some embodiments, the Android system is divided into four layers: an application layer, an application framework layer, an Android runtime (Android runtime) and system library, and a kernel layer. The application layer may include a series of application packages.

As shown in FIG. 2, the application packages may include applications such as Camera, Gallery, Calendar, Phone, Maps, Navigation, WLAN, Bluetooth, Music, Videos, and Messages.

The application framework layer provides an application programming interface (application programming interface, API) and a programming framework for an application at the application layer, and the application framework layer includes some predefined functions.

As shown in FIG. 2, the application framework layer may include a window manager, a content provider, a view system, a phone manager, a resource manager, a notification manager, and the like.

The window manager is configured to manage a window program. The window manager may obtain a size of a display, determine whether there is a status bar, perform screen locking, take a screenshot, and the like.

The content provider is configured to store and obtain data, and enable the data to be accessed by an application. The data may include a video, an image, audio, calls that are made and received, a browsing history and bookmarks, an address book, and the like.

The view system includes visual controls such as a control for displaying a text and a control for displaying an image. The view system may be configured to construct an application. A display interface may include one or more views.

For example, a display interface including an SMS message notification icon may include a text display view and an image display view.

The phone manager is configured to provide a communication function for the electronic device 100, for example, management of a call status (including answering, declining, or the like).

The resource manager provides various resources such as a localized character string, an icon, an image, a layout file, and a video file for an application.

The notification manager enables an application to display notification information in a status bar, and may be configured to convey a notification message. The displayed information may automatically disappear after a short stay without user interaction. For example, the notification manager is configured to notify download completion, provide a message notification, and the like. The notification manager may alternatively be a notification that appears in a top status bar of the system in a form of a graph or a scroll bar text, for example, a notification of an application running on the background or a notification that appears on a screen in a form of a dialog window. For example, text information is prompted in the status bar, an alert sound is played, the electronic device vibrates, or an indicator light blinks.

The system library may include a plurality of functional modules, for example, a surface manager (surface manager), a media library (media library), a three-dimensional graphics processing library (for example, OpenGL ES), 2D graphics engine (for example, SGL).

The surface manager is configured to manage a display subsystem and provide fusion of 2D and 3D layers for a plurality of applications.

The media library supports playback and recording in a plurality of commonly used audio and video formats, static image files, and the like. The media library may support a plurality of audio and video encoding formats, for example, MPEG-4, H.264, MP3, AAC, AMR, JPG, and PNG.

The 3D graphics processing library is configured to implement three-dimensional graphics drawing, image rendering, composition, layer processing, and the like.

The 2D graphics engine is a drawing engine for 2D drawing.

The kernel layer is a layer between hardware and software. The kernel layer includes at least a display driver, a camera driver, an audio driver, and a sensor driver.

With the progress of technologies, video recording scenarios such as video chat and video live broadcast are widely used. In the foregoing scenarios, users are quite sensitive to smoothness of video recording. When frame freezing occurs in the video recording, user experience is reduced. Currently, when load of a processor is excessively high, a frame rate and a resolution during video recording may be reduced. For example, the processor may be a central processing unit (central processing unit, CPU), or may be a processor of another type. However, that the load of the processor is excessively high is not the only reason for decrease of the smoothness of the video recording. If the frame rate and the resolution during the video recording are reduced when the load of the processor is excessively high, the smoothness of the video recording cannot be improved, and the frame rate and the resolution during video recording are further reduced. This further reduces user experience. Based on this, an embodiment of this application provides a video recording method, where smoothness of video recording and load of a processor may be first detected. When it is determined that the load of the processor is high, and the video recording is not smooth, a configuration of the video recording may be reduced to improve the smoothness of the video recording. When it is determined that the load of the processor is low, and the video recording is smooth, the configuration of the video recording may be improved to improve the smoothness of the video recording and/or image quality.

Before the video recording method provided in this embodiment of this application is described, several concepts introduced in this embodiment of this application are first described.

Theoretical frame rate (frames per second, FPS): a theoretical frame rate may be understood as a frame rate corresponding to a case in which no frame is lost. In other words, the theoretical frame rate is a frame rate that needs to be maintained by the electronic device during video recording. For example, if a theoretical frame rate corresponding to a video chat application is 30 FPS, when the video chat application is run on the electronic device, a frame rate of video recording needs to be maintained at 30 FPS.

Theoretical frame interval: a theoretical frame interval is a time interval between every two adjacent frames at a theoretical frame rate. The theoretical frame interval may be obtained by using Formula (1), where D is a frame interval, and V is a frame rate. When V is a theoretical frame rate, a theoretical frame interval may be obtained according to Formula (1). When V is an actual frame rate, an actual frame interval may be obtained according to Formula (1), and the actual frame interval may also be understood as an average frame.

$$D = \frac{1000}{V} \qquad (1)$$

Theoretical quantity of frames: a theoretical quantity of frames is the quantity of frames generated by a camera within a specific period of time at a theoretical frame rate. The theoretical quantity of frames may be obtained by using Formula (2), where S is a quantity of frames, and V is a frame rate. When V is a theoretical frame rate, a theoretical quantity of frames may be obtained according to Formula (2). When V is an actual frame rate, an actual quantity of frames may be obtained according to Formula (2).

$$S = VT \qquad (2)$$

Actual frame rate: an actual frame rate is a frame rate actually detected by the electronic device during video recording. For example, when the video chat application is run on the electronic device, if it is detected that a frame rate of video recording is 25 FPS, the frame rate is an actual frame rate.

Actual frame interval: an actual frame interval is a time interval between every two adjacent frames at an actual frame rate.

Actual quantity of frames: an actual quantity of frames is the quantity of frames generated by a camera within a specific period of time at an actual frame rate.

The foregoing describes several concepts introduced in this embodiment of this application. The following describes a video recording method provided in this embodiment of this application.

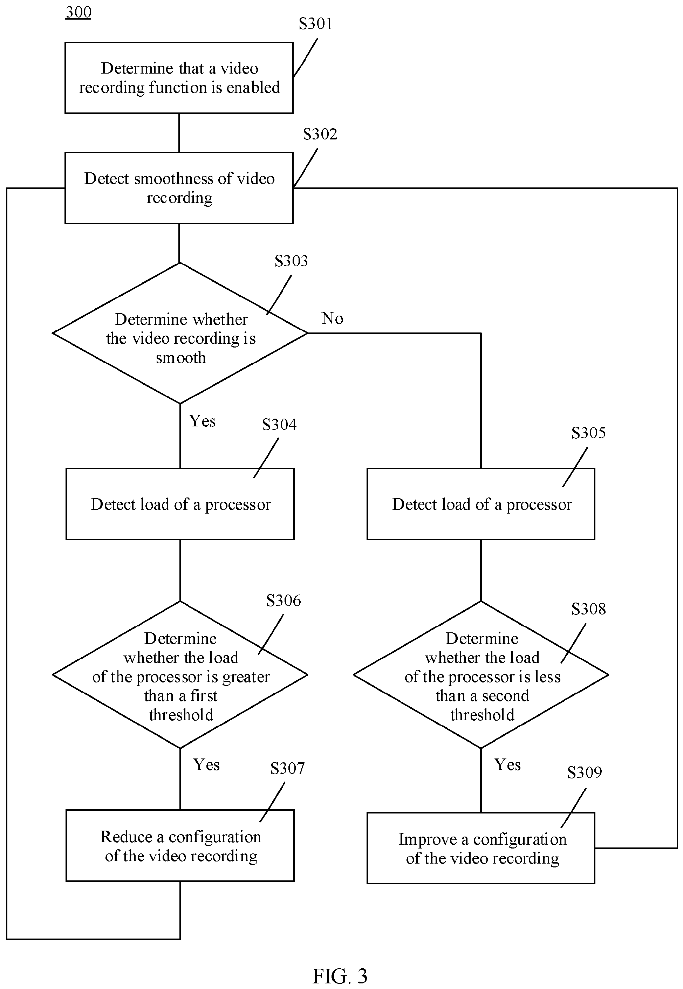

FIG. 3 is a schematic flowchart of a video recording method 300 according to an embodiment of this application. As shown in FIG. 3, the method 300 includes the following steps.

S301: Determine that a video recording function is enabled.

An electronic device may determine that the video recording function of the electronic device is enabled, that is, the electronic device is in a video recording state. In this embodiment of this application, a manner in which the electronic device determines that the video recording function of the electronic device is enabled is not limited.

For example, when detecting that a camera invokes "start recording (startRecording)" in a camera service (CameraServer), the electronic device determines that the video recording function is enabled.

For example, the electronic device determines, based on a displayed interface, that the video recording function is enabled. For example, the electronic device displays an interface #1, and the interface #1 is a video chat interface. The electronic device may obtain the interface #1, and recognizes, by using an artificial intelligence (Artificial Intelligence, AI) model, that the interface #1 is the video chat interface. In this case, the electronic device determines that the video recording function is enabled. The AI model may be deployed locally or deployed on a cloud-side server. When the AI model is deployed on the cloud-side server, the electronic device may send information on the interface #1 to the cloud-side server, and the cloud-side server performs recognition by using the AI model, and then sends a recognition result to the electronic device.

S302: Detect smoothness of video recording.

When determining that the video recording is being performed, the electronic device may detect the smoothness of the video recording.

When detecting the smoothness of the video recording, the electronic device may obtain N parameters, where N≥1, and N is an integer. The N parameters may represent the smoothness of the video recording, so that the electronic device can determine the smoothness of the video recording by using the N parameters. The N parameters include one or more of the following: an actual frame rate, a frame loss rate, and an inter-frame jitter rate.

For example, the electronic device may determine, through a software interface, a quantity of frames that are called back to a camera service process, to determine the actual frame rate of the video recording.

In some embodiments, T seconds are used as a sampling window, and the electronic device may determine, through the software interface, that a quantity of frames that are called back to the camera service process within the T seconds is S. In this case, the actual frame rate WV of the video recording may be obtained by using Formula (3).

$$WV = \frac{S}{T} \qquad (3)$$

In some embodiments, when the actual frame rate of the video recording is determined, because frame rate fluctuation occasionally occurs in one sampling window, actual frame rates of m sampling windows may be determined, and the actual frame rate of the video recording is determined based on the actual frame rates of the m sampling windows, so that an error caused by frame rate fluctuation can be avoided, where m≥2, and m is an integer.

For example, if the electronic device determines that an actual frame rate of a first sampling window is $WV_1$, an actual frame rate of a second sampling window is $WV_2$, and an actual frame rate of an $m^{th}$ sampling window is $WV_m$, the actual frame rate WV of the video recording may be obtained by using Formula (4).

$$WV = \frac{WV_1 + WV_2 + \cdots + WV_m}{m} \qquad (4)$$

For another example, when the electronic device determines the frame rate of the video recording, an attenuation coefficient may be introduced. In this case, the actual frame rate WV of the video recording may be obtained by using Formula (5). An attenuation coefficient corresponding to an actual frame rate of each sampling window may be obtained by using Formula (6), where x=0.5.

$$WV = \sum_{n=1}^{n=m} WV_n * x_n \qquad (5)$$

$$x_n = x^n \qquad (6)$$

It may be understood that the actual frame rate determined by the electronic device may be different from a theoretical frame rate.

It may be understood that the method, described above, for determining the actual frame rate by the electronic device is merely an example, and should not be construed as a limitation on embodiments of this application. Using another method for determining the actual frame rate to implement the video recording method provided in this embodiment of this application should also fall within the protection scope of this application. The following describes, by using an example, a method for determining a quantity of lost frames provided in this embodiment of this application.

For example, the electronic device may determine, through the software interface, the actual quantity of frames that are called back to the camera service process, determine the quantity of lost frames based on a difference between a theoretical quantity of frames and the actual quantity of frames, and determine the frame loss rate based on a ratio of the quantity of lost frames to time.

For example, T seconds are used as the sampling window, and the electronic device determines that the quantity of frames that are called back to the camera service process within the T seconds is S, that is, the actual quantity of frames. If a theoretical frame rate within the T seconds is TV, a theoretical quantity of frames within the T seconds is T×TV. The electronic device may determine, based on the foregoing data, that the quantity of lost frames within the T seconds is T×TV-S, and the frame loss rate within the T seconds may be represented by using Formula (7), where O is the frame loss rate.

$$O = \frac{T \times TV - S}{T} \qquad (6)$$

For example, the electronic device may determine the actual frame rate of the video recording, determine an actual frame interval based on the actual frame rate of the video recording, then determine the quantity of lost frames based on the actual frame interval and a theoretical frame interval, and then determine the frame loss rate based on the ratio of the quantity of lost frames to time.

The electronic device may determine the quantity of lost frames by using Formula (8), where $D_n$ is an actual inter-frame interval between every two adjacent frames (for example, $D_1$ may be understood as an inter-frame interval between a first frame and a second frame), D is the theoretical inter-frame interval, S is the actual quantity of frames, and P is the quantity of lost frames.

$$P = \sum_{n=1}^{n=s-1} \frac{D_n - D}{D} \ (Dn>D) \qquad (8)$$

It may be understood that the method, described above, for determining the quantity of lost frames by the electronic device is merely an example, and should not be construed as a limitation on embodiments of this application. Using another method for determining the quantity of lost frames to implement the video recording method provided in this embodiment of this application should also fall within the protection scope of this application. The following describes, by using an example, a method for determining a frame jitter rate provided in this embodiment of this application.

For example, the electronic device may determine actual frame rates of video recording in a plurality of sampling windows, and determine an inter-frame jitter rate based on the actual frame rates of the plurality of sampling windows.

The electronic device may determine the frame jitter rate by using Formula (9), where Q is the frame jitter rate, $WV_n$ is an actual frame rate that is of a sampling window and that is determined by the electronic device, and m is a quantity of sampling windows.

$$Q = \sum_{n=1}^{n=m-1} \frac{WV_{n+1} - WV_n}{m} \tag{9}$$

It may be understood that the method, described above, for determining the frame jitter rate by the electronic device is merely an example, and should not be construed as a limitation on embodiments of this application. Using another method for determining the frame jitter rate to implement the video recording method provided in this embodiment of this application should also fall within the protection scope of this application.

S303: Determine whether the video recording is smooth.

The electronic device may determine, based on the smoothness of the video recording, whether the video recording is smooth. If the video recording is not smooth, S304 may be performed. If the video recording is smooth, S305 may be performed.

In some embodiments, N=1, and the parameter obtained by the electronic device is the actual frame rate. If the electronic device determines that the actual frame rate is less than a fourth threshold, it may be determined that the video recording is not smooth.

For example, the fourth threshold may be preset by a system. For example, the fourth threshold is 28 FPS.

For example, the fourth threshold may be obtained by using Formula (10), where a is the fourth threshold, x is a coefficient of the fourth threshold, and TV is the theoretical frame rate.

$$a = x * TV \tag{10}$$

In some embodiments, N=1, and the parameter obtained by the electronic device is the frame loss rate. If the electronic device determines that the frame loss rate is greater than a fifth threshold, it may be determined that the video recording is not smooth.

For example, the fifth threshold may be preset by the system. For example, the fifth threshold is 15.

For example, the fifth threshold may be obtained by using Formula (11), where b is the fifth threshold, y is a coefficient of the fifth threshold, and TV is the theoretical frame rate.

$$b = y * TV \tag{11}$$

In some embodiments, N=1, and the parameter obtained by the electronic device is the inter-frame jitter rate. If the electronic device determines that the inter-frame jitter rate is greater than a sixth threshold, it may be determined that the video recording is not smooth.

For example, the sixth threshold may be preset by the system. For example, the sixth threshold is 20.

For example, the sixth threshold may be obtained by using Formula (12), where c is the sixth threshold, z is a coefficient of the sixth threshold, and TS is the theoretical quantity of frames.

$$c = z * TS \tag{12}$$

In some embodiments, N=2, and the parameters obtained by the electronic device are the actual frame rate and the frame loss rate. If the electronic device determines that the actual frame rate is less than the fourth threshold and that the frame loss rate is greater than the fifth threshold, it may be determined that the video recording is not smooth.

In some embodiments, N=2, and the parameters obtained by the electronic device are the actual frame rate and the inter-frame jitter rate. If the electronic device determines that the actual frame rate is less than the fourth threshold and that the inter-frame jitter rate is greater than the sixth threshold, it may be determined that the video recording is not smooth.

In some embodiments, N=2, and the parameters obtained by the electronic device are the quantity of lost frames and the frame jitter rate. If the electronic device determines that the frame loss rate is greater than the fifth threshold and that the inter-frame jitter rate is greater than the sixth threshold, it may be determined that the video recording is not smooth.

In some embodiments, N=3, and the parameters obtained by the electronic device are the actual frame rate, the frame loss rate, and the inter-frame jitter rate. If the electronic device determines that the actual frame rate is less than the fourth threshold, that the frame loss rate is greater than the fifth threshold, and that the inter-frame jitter rate is greater than the sixth threshold, it may be determined that the video recording is not smooth.

In some embodiments, N=1, and the parameter obtained by the electronic device is the actual frame rate. If the electronic device determines that the actual frame rate is greater than a tenth threshold, it may be determined that the video recording is smooth. The tenth threshold may be the same as the fourth threshold, or may be different from the fourth threshold. Descriptions of the tenth threshold are similar to the descriptions of the fourth threshold. For brevity, details are not described herein again.

In some embodiments, N=1, and the parameter obtained by the electronic device is the frame loss rate. If the electronic device determines that the frame loss rate is less than an eleventh threshold, it may be determined that the video recording is smooth. The eleventh threshold may be the same as the fifth threshold, or may be different from the fifth threshold. Descriptions of the eleventh threshold are similar to the descriptions of the fifth threshold. For brevity, details are not described herein again.

In some embodiments, N=1, and the parameter obtained by the electronic device is the inter-frame jitter rate. If the electronic device determines that the inter-frame jitter rate is less than a twelfth threshold, it may be determined that video recording is smooth. The twelfth threshold may be the same as the sixth threshold, or may be different from the sixth threshold. Descriptions of the twelfth threshold are similar to the descriptions of the sixth threshold. For brevity, details are not described herein again.

In some embodiments, N=2, and the parameters obtained by the electronic device are the actual frame rate and the frame loss rate. If the electronic device determines that the actual frame rate is greater than the tenth threshold and that the frame loss rate is less than the eleventh threshold, it may be determined that the video recording is smooth.

In some embodiments, N=2, and the parameters obtained by the electronic device are the actual frame rate and the inter-frame jitter rate. If the electronic device determines that the actual frame rate is greater than the tenth threshold and that the inter-frame jitter rate is less than the twelfth threshold, it may be determined that the video recording is smooth.

In some embodiments, N=2, and the parameters obtained by the electronic device are the quantity of lost frames and the frame jitter rate. If the electronic device determines that the frame loss rate is less than the eleventh threshold and that the inter-frame jitter rate is less than the twelfth threshold, it may be determined that the video recording is smooth.

In some embodiments, N=3, and the parameters obtained by the electronic device are the actual frame rate, the frame loss rate, and the inter-frame jitter rate. If the electronic device determines that the actual frame rate is greater than the tenth threshold, that the frame loss rate is less than the eleventh threshold, and that the inter-frame jitter rate is less than the twelfth threshold, it may be determined that the video recording is smooth.

It should be noted that the foregoing parameters used to determine the smoothness of the video recording are merely an example, and this embodiment of this application is not limited thereto. The video recording method provided in this embodiment of this application may use any method for determining the smoothness of the video recording. For example, in this embodiment of this application, any mathematical transformation may be further performed on the foregoing parameters to obtain new parameters that represent the smoothness of the video recording.

S304: Detect load of a processor.

When determining that the video recording is not smooth, the electronic device may detect the load of the processor.

S305: Detect the load of the processor.

When determining that the video recording is smooth, the electronic device may also detect the load of the processor.

A manner of detecting the load of the processor is not limited in embodiments of this application. For example, the load of the processor may be determined by using a clock tick technology.

S306: Determine whether the load of the processor is greater than a first threshold.

When determining that the video recording is not smooth, the electronic device may determine whether the load of the processor is greater than the first threshold. If the electronic device determines that the load of the processor is greater than the first threshold, S307 is performed. If the electronic device determines that the load of the processor is less than the first threshold, the electronic device performs no processing.

For example, the first threshold is 80%. When the electronic device determines that the video recording is not smooth, and determines that the load of the processor is 90%, the electronic device performs S307.

S307: Reduce a configuration of the video recording.

When the electronic device determines that the video recording is not smooth and that the load of the processor is load, the electronic device may reduce the configuration of the video recording to improve the smoothness of the video recording. In this embodiment of this application, a condition for triggering the electronic device to reduce the configuration of the video recording may be referred to as a first trigger condition. In this embodiment, the first trigger condition includes that the video recording is not smooth and that the load of the processor is greater than the first threshold.

For example, the electronic device may reduce a resolution of the video recording to improve the smoothness of the video recording.

For example, the electronic device may reduce a frame rate of the video recording to improve the smoothness of the video recording.

It should be noted that, if the electronic device does not reduce the theoretical frame rate of the video recording, and the load of the processor is high, the actual frame rate may fluctuate. When the actual frame rate fluctuates, the video recording is not smooth for the user. After the electronic device reduces the theoretical frame rate of the video recording, although an overall actual frame rate of the video recording is reduced, the overall actual frame rate and overall frame space of the video recording can remain stable. Therefore, the user can intuitively feel that the video recording is smooth.

In this embodiment of this application, the electronic device may detect the smoothness of the video recording and the load of the processor, and may reduce the configuration of the video recording only when determining that the video recording is not smooth and that the load of the processor is high. This avoids deterioration of image quality caused by blindly reducing the configuration of the video recording and can improve user experience.

Optionally, in some embodiments, after performing S307, the electronic device may continue to perform S302 to dynamically adjust the configuration of the video recording.

S308: Determine whether the load of the processor is less than a second threshold.

When determining that the video recording is smooth, the electronic device may determine whether the load of the processor is less than the second threshold. If the electronic device determines that the load of the processor is less than the third threshold, S309 is performed. If the electronic device determines that the load of the processor is greater than the third threshold, the electronic device performs no processing.

In some embodiments, the first threshold is the same as the second threshold.

In some other embodiments, the first threshold is different from the second threshold.

S309: Improve the configuration of the video recording.

When determining that the video recording is smooth and that the load of the processor is low, the electronic device may improve the configuration of the video recording to improve video quality of the video recording. In this embodiment of this application, a condition for triggering the electronic device to improve the configuration of the video recording may be referred to as a second trigger condition. In this embodiment, the second trigger condition includes that the video recording is not smooth and that the load of the processor is greater than the first threshold.

For example, the electronic device may improve the resolution of the video recording to improve the image quality of the video recording, to improve the video quality of the video recording.

For example, the electronic device may increase the frame rate of the video recording to improve the smoothness of the video recording, to improve the video quality of the video recording.

It may be understood that, although the video recording before adjustment is in a smooth state, after the electronic device increases the frame rate of the video recording, the user can intuitively feel that the smoothness of the video recording is improved due to the increase of the frame rate. For example, before the adjustment is performed by the electronic device, a frame rate of a video chat application is 30 FPS. When determining that the video recording is smooth and that the load of the processor is low, the electronic device may increase the frame rate of the video chat application to 40 FPS.

In this embodiment of this application, the electronic device may detect the smoothness of the video recording and the load of the processor. When it is determined that the video recording is smooth and that the load of the processor is low, the configuration of the video recording may be improved, so that the smoothness and the image quality of the video recording can be further improved, and user experience is enhanced.

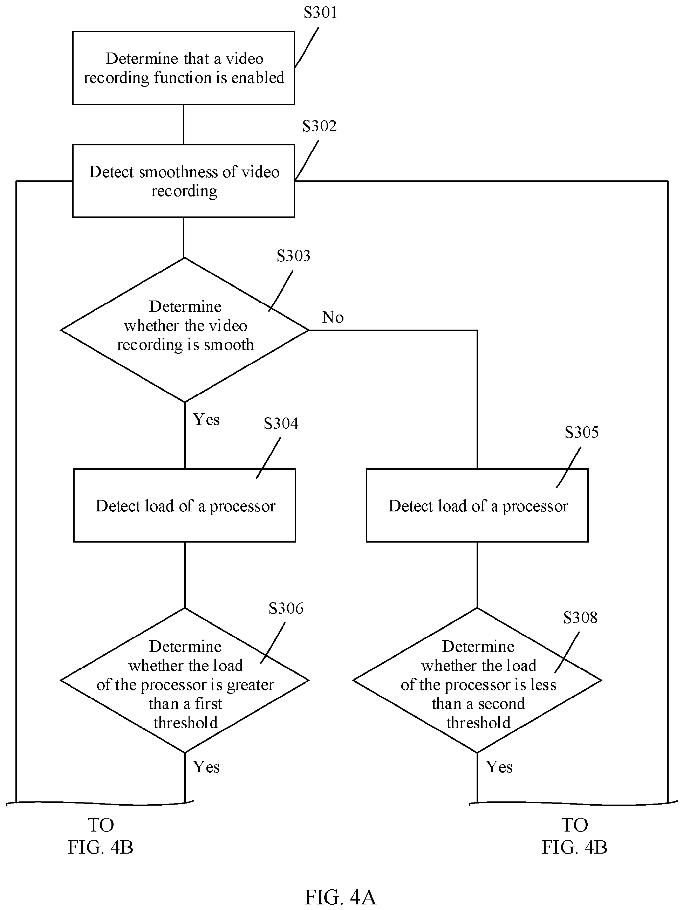

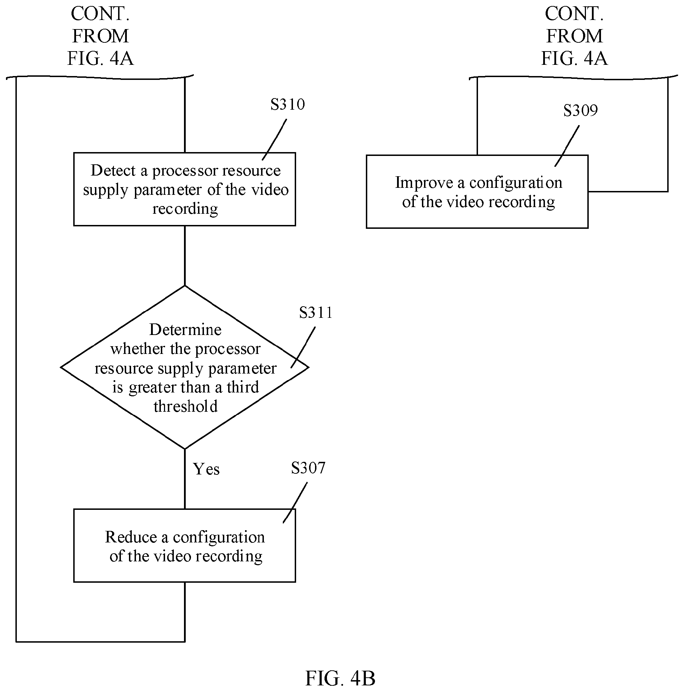

FIG. 4A and FIG. 4B are another example flowchart of a video recording method according to an embodiment of this application. As shown in FIG. 4A and FIG. 4B,

before the configuration of the video recording is reduced in S307, the method further includes the following step.

S310: Detect a processor resource supply parameter of the video recording.

The electronic device may detect the processor resource supply parameter of the video recording, where the processor resource supply parameter indicates a resource provided by the processor for the video recording. For example, if the processor resource supply parameter is 50%, it may be understood that 50% of the load of the processor is used to perform a video recording function.

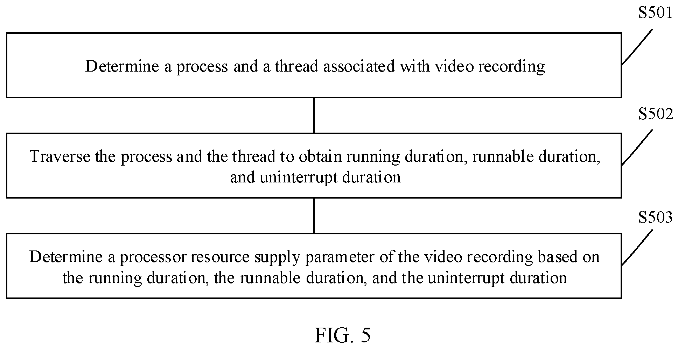

FIG. 5 is a schematic flowchart of a method 500 for detecting a processor resource supply parameter of video recording according to an embodiment of this application. As shown in FIG. 5, the method includes the following steps.

S501: Determine a process and/or a thread associated with the video recording.

The electronic device may determine, in the following several manners, the process and/or the thread associated with the video recording.

In a possible implementation, if a trustlist is preset in the electronic device, the electronic device may determine, based on the trustlist, the process and/or the thread associated with the video recording.

For example, the electronic device may determine, based on the preset trustlist, that the CameraServer process and the camera.provider process are processes associated with the video recording.

In a possible implementation, the electronic device determines, based on running duration of the thread, the thread associated with the video recording.

The electronic device may determine, based on a ratio of running duration of a thread in a thread pool (thread pool) to total duration, that the thread is the thread associated with the video recording when the ratio of the running duration of the thread in the thread pool to the total duration is greater than a threshold, where the running duration of the thread includes running duration.

S502: Traverse the process and the thread to obtain the running duration, runnable duration, and uninterrupt duration.

After determining the thread and/or the process associated with the video recording, the electronic device may determine running duration, runnable duration, and uninterrupt duration of each thread and/or process in the sampling window.

S503: Determine the processor resource supply parameter of the video recording based on the running duration, the runnable duration, and the uninterrupt duration.

After obtaining the foregoing three kinds of duration through traversal, the electronic device may determine the processor resource supply parameter of the video recording according to Formula (13), where d is the processor resource supply parameter of the video recording, $T_1$ is the running duration, $T_2$ is the runnable duration, and $T_3$ is the uninterrupt duration.

$$d = \frac{T_1}{T_1 + T_2 + T_3} \qquad (13)$$

S311: Determine whether the processor resource supply parameter is greater than a third threshold.

The electronic device determines whether the processor resource supply parameter is greater than the third threshold, and if the processor resource supply parameter is greater than the third threshold, S307 is performed. If the processor resource supply parameter is not greater than the third threshold, no processing is performed. In this embodiment, the first trigger condition further includes that the processor resource supply parameter is greater than the third threshold.

It should be noted that there is no actual sequence between S310 and S304. In other words, the electronic device may first detect and determine that the load of the processor is greater than the first threshold, and then detect the processor resource supply parameter of the video recording. When it is determined that the processor supply parameter of the video recording is greater than the third threshold, S307 is performed. Alternatively, the electronic device may first detect and determine that the processor resource supply parameter of the video recording is greater than the third threshold, and then detect the load of the processor. When it is determined that the load of the processor is greater than the first threshold, S307 is performed. Alternatively, the electronic device may detect and determine both the load of the processor and the processor resource supply parameter of the video recording. When it is determined that the processor supply parameter of the video recording is greater than the third threshold and that the load of the processor is greater than the first threshold, S307 is performed.

Optionally, in some embodiments, before reducing the configuration of the video recording in S307, the method further includes:

detecting a temperature of the electronic device; and
determining whether the temperature of the electronic device is greater than a seventh threshold.

The electronic device may detect the temperature of the electronic device. When it is determined that the temperature of the electronic device is greater than the seventh threshold, S307 may be performed; otherwise, no processing is performed. In this embodiment, the first trigger condition further includes that the temperature of the electronic device is greater than the seventh threshold.

Similarly, a sequence of detecting the temperature of the electronic device by the electronic device and detecting the load of the processor by the electronic device is not limited in this embodiment of this application.

In this embodiment of this application, when adjusting the configuration of the video recording, the electronic device may further consider the temperature of the electronic device. When the smoothness of the video recording is low, and the temperature of the electronic device is high, the electronic device may reduce the configuration of the video recording.

Optionally, in some embodiments, before improving the configuration of the video recording in S309, the method further includes:

detecting the temperature of the electronic device; and
determining whether the temperature of the electronic device is less than an eighth threshold.

The electronic device may detect the temperature of the electronic device. When it is determined that the temperature of the electronic device is less than the eighth threshold, S309 may be performed; otherwise, no processing is performed. The seventh threshold may be equal to or not equal to the eighth threshold. In this embodiment, the second trigger condition further includes that the temperature of the electronic device is less than the eighth threshold.

Similarly, the sequence of detecting the temperature of the electronic device by the electronic device and detecting the load of the processor by the electronic device is not limited in this embodiment of this application.

In this embodiment of this application, when improving the configuration of the video recording, the electronic device may further consider the temperature of the electronic device. When the temperature of the electronic device is low, the electronic device may improve the configuration of the video recording.

Optionally, in some embodiments, before improving the configuration of the video recording in S309, the method further includes:

> detecting a battery level of the electronic device; and
>
> determining whether the battery level of the electronic device is greater than a ninth threshold.

The electronic device may detect the temperature of the electronic device. When it is determined that the battery level of the electronic device is greater than the ninth threshold, S309 may be performed; otherwise, no processing is performed. In this embodiment, the second trigger condition further includes that the battery level of the electronic device is greater than the eighth threshold.

Similarly, a sequence of detecting the battery level of the electronic device by the electronic device and detecting the load of the processor by the electronic device is not limited in this embodiment of this application.

In this embodiment of this application, when improving the configuration of the video recording, the electronic device may further consider the battery level of the electronic device. When the battery level of the electronic device is high, the electronic device may improve the configuration of the video recording, so that the electronic device is not powered off due to improvement of the configuration of the video recording.

In the foregoing descriptions, when performing the video recording function, the electronic device may detect the smoothness and the load of the processor, and automatically adjust the configuration of the video recording. However, this embodiment of this application is not limited thereto. In some other embodiments, the electronic device may adjust the configuration of the video recording based on an operation of the user.

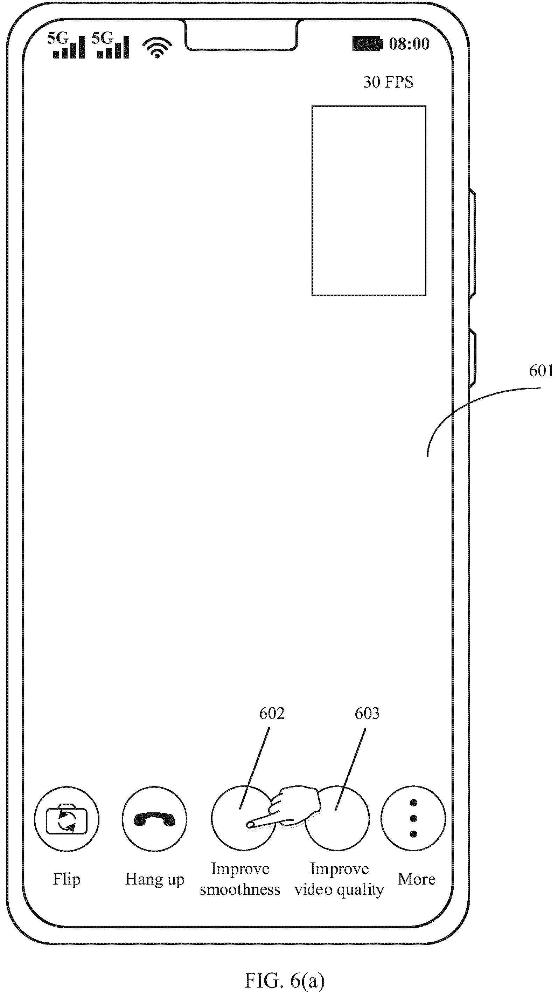

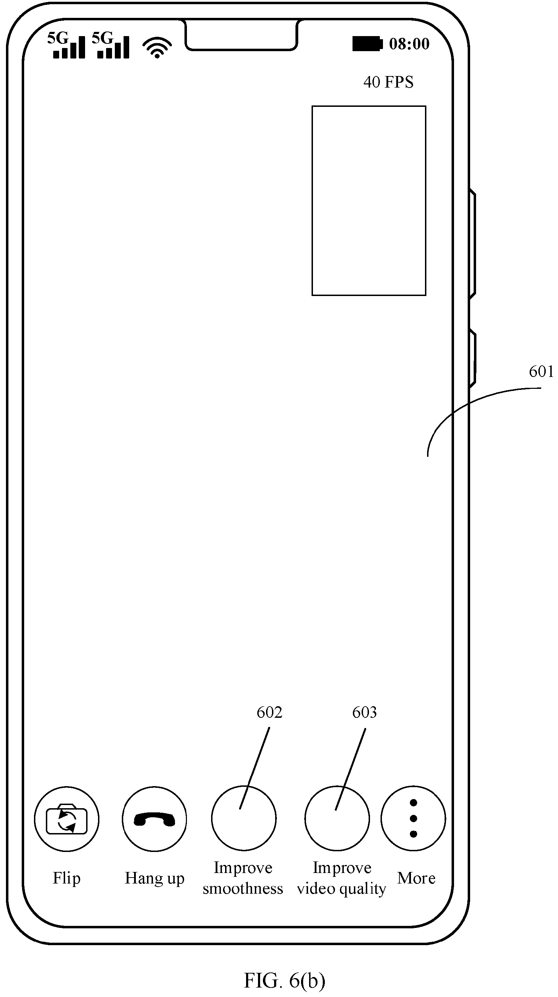

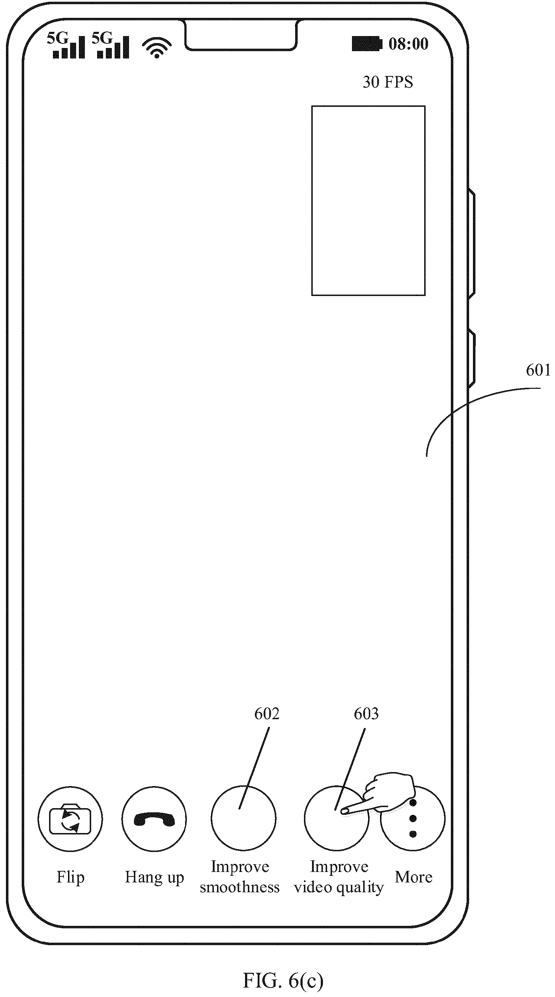

FIG. 6(a), FIG. 6(b), and FIG. 6(c) show a group of graphical user interfaces (graphical user interface, GUI) according to an embodiment of this application.

As shown in FIG. 6(a) and FIG. 6(b), the electronic device displays an interface 601, and the interface 601 is an interface of a video chat application. The electronic device may display, on the interface 601, that an actual frame rate at which the video chat application is run is 30 FPS. When the first trigger condition is met, the electronic device may display a control 602 on the interface 601, and the control 602 corresponds to a function used to improve smoothness. The electronic device may reduce a configuration of video recording (for example, reducing a resolution of the video recording) in response to detecting an operation of tapping the control 602 by the user, so that the actual frame rate of the video chat application is increased to 40 FPS.

In some other embodiments, the electronic device may not display, on the interface 601, the actual frame rate at which the video chat application is run.

In this embodiment of this application, when determining that the first trigger condition is met, the electronic device may display the control used to improve smoothness, so that the electronic device can reduce the configuration of the video recording in response to an operation of the user for the control, to improve the smoothness of the video recording. This can improve user experience.

In some other embodiments, the electronic device may first display the control 602. Before smoothness of the video recording and load of a processor are detected, the control 602 is in a disabled (disabled) state. The disabled state may also be referred to as an unavailable state, that is, the user cannot operate the control 602. When the control 602 is in the disabled state, the electronic device may display the control 602 in a dimmed manner. Before reducing the configuration of the video recording, the electronic device may change the control 602 from the disabled state to a normal (normal) state, so that the control 602 is operable (for example, can be tapped). The electronic device may reduce the configuration of the video recording in response to detecting an operation of tapping the control 602 by the user.

Optionally, in some embodiments, as shown in FIG. 6(c), the electronic device may further display a control 603 on the interface 601 when detecting that the video recording is smooth and that the load of the processor is less than a second threshold. The control 603 corresponds to a function used to improve video quality. The electronic device may improve the configuration of the video recording in response to detecting an operation of tapping the control 603 by the user.

In this embodiment of this application, when determining that the second trigger condition is met, the electronic device may display the control used to improve the video quality, and may improve the configuration of the video recording in response to an operation of the user for the control to improve the video quality of the video recording. This can improve user experience.

In some other embodiments, the electronic device may first display the control 603. Before the smoothness of the video recording and the load of the processor are detected, the control is in a disabled state. Before the electronic device improves the configuration of the video recording, the electronic device changes the control 603 from the disabled state to a normal state, so that the control 603 is operable. The electronic device may improve the configuration of the video recording in response to detecting the operation of tapping the control 603 by the user.

The foregoing mainly describes, from a perspective of the electronic device, the video recording method provided in embodiments of this application. It may be understood that, to implement the foregoing functions, the electronic device and a server include corresponding hardware structures and/or software modules for performing the functions. A person skilled in the art should easily be aware that, in combination with algorithm steps of the examples described in embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the processor of the electronic device may be divided into function modules based on the foregoing method examples. For example, each function module may be obtained through division based on each corresponding function, or two or more functions may be integrated into one processing module. The integrated module may be implemented in a form of hardware, or may be implemented in a form of a software functional module.

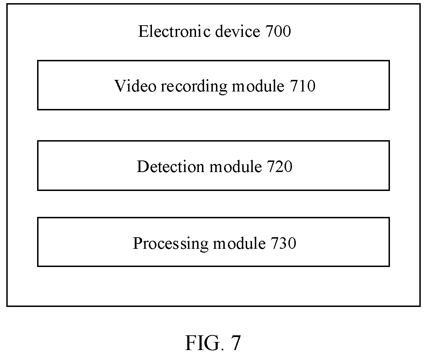

When each function module is obtained through division based on each corresponding function, FIG. 7 is a diagram of composition of an electronic device according to an embodiment of this application. As shown in FIG. 7, an electronic device 700 includes: a video recording module 710, a detection module 720, and a processing module 730. In some implementations, the electronic device 700 may perform the foregoing method 300. The video recording module 710 is configured to perform a video recording function.

The detection module 720 is configured to detect that the electronic device has enabled the video recording function.

The detection module 720 is further configured to detect smoothness of video recording and load of a processor.

The processing module 730 is configured to reduce a configuration of the video recording if it is determined that a first trigger condition is met, where the first trigger condition includes: determining, based on the smoothness of the video recording, that the video recording is not smooth and that the load of the processor is greater than a first threshold.

Optionally, in some embodiments, the processing module 730 is further configured to improve the configuration of the video recording if it is determined that a second trigger condition is met, where the second trigger condition includes: determining, based on the smoothness of the video recording, that the video recording is smooth and that the load of the processor is less than a second threshold.

Optionally, in some embodiments, the detection module 720 is further configured to detect a processor resource supply parameter of the video recording.

Optionally, in some embodiments, the first trigger condition further includes that the processor resource supply parameter is greater than a third threshold.

Optionally, in some embodiments, the detection module 720 is specifically configured to obtain N parameters, where the N parameters include one or more of the following: an actual frame rate, a frame loss rate, and an inter-frame jitter rate.

Optionally, in some embodiments, the determining, based on the smoothness of the video recording, that the video recording is not smooth includes:

The actual frame rate is less than a fourth threshold; and/or
the frame loss rate is greater than a fifth threshold; and/or
the inter-frame jitter rate is greater than a sixth threshold.

Optionally, in some embodiments, the detection module 720 is further configured to detect a temperature of the electronic device.

Optionally, in some embodiments, the first trigger condition further includes that the temperature of the electronic device is greater than a seventh threshold.

Optionally, in some embodiments, the detection module 720 is further configured to detect the temperature of the electronic device.

Optionally, in some embodiments, the second trigger condition further includes that the temperature of the electronic device is less than an eighth threshold.

Optionally, in some embodiments, the detection module 720 is further configured to detect a battery level of the electronic device.

Optionally, in some embodiments, the second trigger condition further includes that the battery level of the electronic device is greater than a ninth threshold.

It should be noted that all related content of the steps in the foregoing method embodiments may be cited in function descriptions of corresponding functional modules. Details are not described herein again. The electronic device provided in this embodiment of this application is configured to perform the foregoing video recording method, and therefore can achieve same effect as the foregoing.

An embodiment of this application further provides an electronic device, including a processor, a memory, an application, and a computer program. The foregoing devices may be connected through one or more communication buses. The one or more computer programs are stored in the memory and are configured to be executed by the one or more processors. The one or more computer programs include instructions, and the instructions may be used to enable the electronic device to perform the steps of the electronic device in the foregoing embodiments.

For example, the processor may be specifically the processor 110 shown in FIG. 1, and the memory may be specifically the internal memory 120 shown in FIG. 1 and/or the external memory connected to the electronic device.

An embodiment of this application further provides a chip. The chip includes a processor and a communication interface, the communication interface is configured to receive a signal, and transmit the signal to the processor, and the processor processes the signal, to enable the video recording method in any one of the foregoing possible implementations to be performed.

An embodiment further provides a computer-readable storage medium. The computer-readable storage medium stores computer instructions. When the computer instructions are run on an electronic device, the electronic device is enabled to perform the foregoing related method steps to implement the video recording method in the foregoing embodiments.

An embodiment further provides a computer program product. When the computer program product is run on a computer, the computer is enabled to perform the foregoing related steps to implement the video recording method in the foregoing embodiments.

According to the context, the term "when" or "after" used in the foregoing embodiments may be interpreted as a meaning of "if", "after", "in response to determining", or "in response to detecting". Similarly, according to the context, the phrase "when it is determined that..." or "if (a stated condition or event) is detected" may be interpreted as a meaning of "if it is determined that...", "in response to determining...", "when (a stated condition or event) is detected", or "in response to detecting (a stated condition or event)".

A person of ordinary skill in the art may be aware that example units and algorithm steps described with reference to embodiments disclosed in this specification may be implemented by electronic hardware or a combination of computer software and electronic hardware. Whether these functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In several embodiments provided in this application, it should be understood that the disclosed system, apparatus, and method may be implemented in another manner. For example, the described apparatus embodiments are merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in an electrical, mechanical, or another form.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes any medium that may store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A video recording method, wherein the method is applied to an electronic device, a video recording function is enabled on the electronic device, and the method comprises:

   detecting smoothness of video recording and load of a processor; and
   if it is determined that a first trigger condition is met, reducing a configuration of the video recording to improve the smoothness of the video recording, wherein the first trigger condition comprises determining, based on the smoothness of the video recording, that the video recording is not smooth and that the load of the processor is greater than a first threshold.

2. The method according to claim 1, wherein the configuration of the video recording comprises at least one of a frame rate and a resolution of the video recording.

3. The method according to claim 1 or 2, wherein the method further comprises:
   if it is determined that a second trigger condition is met, improving the configuration of the video recording to improve video quality of the video recording, wherein the second trigger condition comprises determining, based on the smoothness of the video recording, that the video recording is smooth and that the load of the processor is less than a second threshold.

4. The method according to any one of claims 1 to 3, wherein before the reducing a configuration of the video recording, the method further comprises:
   detecting a processor resource supply parameter of the video recording, wherein the processor resource supply parameter of the video recording represents a proportion of occupying the load of the processor by the video recording; and the first trigger condition further comprises that the processor resource supply parameter of the video recording is greater than a third threshold.

5. The method according to claim 4, wherein the processor resource supply parameter is a ratio of running duration of a process and/or a thread associated with the video recording to total duration.

6. The method according to any one of claims 1 to 5, wherein the detecting smoothness of video recording comprises:
   obtaining N parameters, wherein the N parameters represent the smoothness of the video recording, $N \geq 1$, and N is an integer.

7. The method according to claim 6, wherein the N parameters comprise one or more of the following: an actual frame rate, a frame loss rate, and an inter-frame jitter rate.

8. The method according to claim 7, wherein the determining, based on the smoothness of the video recording, that the video recording is not smooth comprises:

   the actual frame rate is less than a fourth threshold; and/or
   the frame loss rate is greater than a fifth threshold; and/or
   the inter-frame jitter rate is greater than a sixth threshold.

9. The method according to any one of claims 1 to 8, wherein before the reducing a configuration of the video recording, the method further comprises:
   detecting a temperature of the electronic device, wherein the first trigger condition further comprises that the temperature of the electronic device is greater than a seventh threshold.

10. The method according to any one of claims 1 to 9, wherein before the reducing a configuration of the video recording, the method further comprises:

    displaying a first control, wherein the first control corresponds to a function of reducing the configuration of the video recording; and
the reducing a configuration of the video recording comprises:
reducing the configuration of the video recording in response to an operation of a user for the first control.

11. The method according to any one of claims 1 to 8, wherein the electronic device displays a first control on an interface of the video recording, the first control corresponds to a function of reducing the configuration of the video recording, the first control is in a disabled state before the smoothness of the video recording and the load of the processor are detected, and before the reducing a configuration of the video recording, the method further comprises:

changing the first control from the disabled state to a normal state, so that the first control is operable; and
the reducing a configuration of the video recording comprises:
reducing the configuration of the video recording in response to an operation of a user for the first control.

12. The method according to claim 2, wherein before the improving the configuration of the video recording, the method further comprises:
detecting a temperature of the electronic device, wherein the second trigger condition further comprises that the temperature of the electronic device is less than an eighth threshold.

13. The method according to claim 2, wherein before the improving the configuration of the video recording, the method further comprises:
detecting a battery level of the electronic device, wherein the second trigger condition further comprises that the battery level of the electronic device is greater than a ninth threshold.

14. The method according to claim 2, wherein before the improving the configuration of the video recording, the method further comprises:

displaying a second control, wherein the second control corresponds to a function of improving the configuration of the video recording; and
the improving the configuration of the video recording comprises:
improving the configuration of the video recording in response to an operation of a user for the second control.

15. The method according to claim 2, wherein the electronic device displays a second control on an interface of the video recording, the second control corresponds to a function of improving the configuration of the video recording, the second control is in a disabled state before the smoothness of the video recording and the load of the processor are detected, and before the reducing the configuration of the video recording, the method further comprises:

changing the second control from the disabled state to a normal state, so that the second control is operable; and
the improving the configuration of the video recording comprises:
improving the configuration of the video recording in response to an operation of a user for the second control.

16. An electronic device, comprising one or more processors and one or more memories, wherein the one or more memories store one or more computer programs, the one or more computer programs comprise instructions, and when the instructions are executed by the one or more processors, the method according to any one of claims 1 to 15 is performed.

17. A chip, wherein the chip comprises a processor and a communication interface, the communication interface is configured to: receive a signal, and transmit the signal to the processor, and the processor processes the signal, to enable the method according to any one of claims 1 to 15 to be performed.

18. A computer-readable storage medium, wherein the computer-readable storage medium stores computer instructions, and when the computer instructions are run on a computer, the method according to any one of claims 1 to 15 is performed.

Electronic device 100

FIG. 1

| Application layer | Camera | Calendar | Maps | WLAN | Music | Messages |
|---|---|---|---|---|---|---|
| | Gallery | Phone | Navigation | Bluetooth | Videos | ... |

| Application framework layer | Window manager | Content provider | Phone manager | Resource manager |
|---|---|---|---|---|
| | Notification manager | View system | ... | |

| System library | Surface manager | Three-dimensional graphics processing library | | |
|---|---|---|---|---|
| | Two-dimensional graphics engine | Media library | Image processing library | ... |

| Kernel layer | Display driver | Camera driver | |
|---|---|---|---|
| | Audio driver | Sensor driver | ... |

FIG. 2

300

S301

Determine that a video recording function is enabled

S302

Detect smoothness of video recording

S303

Determine whether the video recording is smooth

No

Yes

S304

Detect load of a processor

S305

Detect load of a processor

S306

Determine whether the load of the processor is greater than a first threshold

S308

Determine whether the load of the processor is less than a second threshold

Yes

S307

Reduce a configuration of the video recording

Yes

S309

Improve a configuration of the video recording

FIG. 3

S301

Determine that a video
recording function is enabled

S302

Detect smoothness of video
recording

S303

Determine
whether the video
recording is smooth

No

Yes

S304

Detect load of a processor

S305

Detect load of a processor

S306

Determine
whether the load
of the processor is greater
than a first
threshold

Yes

S308

Determine
whether the load
of the processor is less
than a second
threshold

Yes

TO
FIG. 4B

TO
FIG. 4B

FIG. 4A

CONT.
FROM
FIG. 4A

CONT.
FROM
FIG. 4A

S310

Detect a processor resource supply parameter of the video recording

S309

Improve a configuration of the video recording

S311

Determine whether the processor resource supply parameter is greater than a third threshold

Yes        S307

Reduce a configuration of the video recording

FIG. 4B

Determine a process and a thread associated with video recording — S501

Traverse the process and the thread to obtain running duration, runnable duration, and uninterrupt duration — S502

Determine a processor resource supply parameter of the video recording based on the running duration, the runnable duration, and the uninterrupt duration — S503

FIG. 5

FIG. 6(a)

40 FPS

601

602        603

Flip        Hang up        Improve        Improve        More
                          smoothness     video quality

FIG. 6(b)

30 FPS

601

602       603

Flip       Hang up       Improve smoothness       Improve video quality       More

FIG. 6(c)

Electronic device 700

Video recording module 710

Detection module 720

Processing module 730

FIG. 7

## INTERNATIONAL SEARCH REPORT

International application No.

**PCT/CN2024/070529**

| A. | CLASSIFICATION OF SUBJECT MATTER |
|---|---|

H04N5/76(2006.01)i

According to International Patent Classification (IPC) or to both national classification and IPC

| B. | FIELDS SEARCHED |
|---|---|

Minimum documentation searched (classification system followed by classification symbols)

IPC: H04N

Documentation searched other than minimum documentation to the extent that such documents are included in the fields searched

Electronic data base consulted during the international search (name of data base and, where practicable, search terms used)

CNTXT, ENTXTC, VEN, CNKI: 录像, 视频, 帧率, 分辨率, 负载, 负荷, 流畅, 卡顿, video, frame rate, resolution, load, fluency, smoothness

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | CN 112005218 A (HUAWEI TECHNOLOGIES CO., LTD.) 27 November 2020 (2020-11-27) description, paragraphs [0042]-[0085] | 1-18 |
| Y | CN 105657321 A (LESHI ZHIXIN ELECTRONICS TECHNOLOGY (TIANJIN) CO., LTD.) 08 June 2016 (2016-06-08) description, paragraphs [0041]-[0103] | 1-18 |
| A | CN 111405228 A (JUHAOKAN TECHNOLOGY CO., LTD.) 10 July 2020 (2020-07-10) entire document | 1-18 |
| A | CN 109445941 A (OPPO GUANGDONG MOBILE TELECOMMUNICATIONS CORP., LTD.) 08 March 2019 (2019-03-08) entire document | 1-18 |
| A | JP 2009194518 A (SONY CORP.) 27 August 2009 (2009-08-27) entire document | 1-18 |

☐ Further documents are listed in the continuation of Box C.  ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **18 February 2024** | **01 March 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2024/070529**

| Patent document cited in search report | | | Publication date (day/month/year) | Patent family member(s) | | | Publication date (day/month/year) |
|---|---|---|---|---|---|---|---|
| CN | 112005218 | A | 27 November 2020 | None | | | |
| CN | 105657321 | A | 08 June 2016 | WO | 2017080214 | A1 | 18 May 2017 |
| | | | | RU | 2016134598 | A | 09 December 2019 |
| | | | | EP | 3188479 | A1 | 05 July 2017 |
| CN | 111405228 | A | 10 July 2020 | None | | | |
| CN | 109445941 | A | 08 March 2019 | None | | | |
| JP | 2009194518 | A | 27 August 2009 | None | | | |

Form PCT/ISA/210 (patent family annex) (July 2022)

**REFERENCES CITED IN THE DESCRIPTION**

**Patent documents cited in the description**

- CN 202310086132X